(19) Europäisches Patentamt
European Patent Office
Office européen des brevets

(11) **EP 0 984 595 B1**

(12) **EUROPEAN PATENT SPECIFICATION**

(45) Date of publication and mention
of the grant of the patent:
**25.04.2007 Bulletin 2007/17**

(51) Int Cl.:
*H04L 27/00* (2006.01)

(21) Application number: **98116646.5**

(22) Date of filing: **03.09.1998**

(54) **Blind modulation detection**

Blinde Detektion von Modulation

Detection aveugle de modulation

(84) Designated Contracting States:
**DE GB**

(43) Date of publication of application:
**08.03.2000 Bulletin 2000/10**

(73) Proprietor: **Sony Deutschland GmbH**
**10785 Berlin (DE)**

(72) Inventors:
• **Böhnke, Ralf,**
**c/o Sony International (Europe) GmbH**
**Stuttgarter Strasse 106,**
**70736 Fellbach (DE)**
• **Konschak, Tino**
**c/o Sony International (Europe) GmbH**
**Stuttgarter Strasse 106,**
**70736 Fellbach (DE)**
• **Dölle, Thomas**
**c/o Sony International (Europe) GmbH**
**Stuttgarter Strasse 106,**
**70736 Fellbach (DE)**

(74) Representative: **Rupp, Christian et al**
**Mitscherlich & Partner**
**Patent- und Rechtsanwälte**
**Sonnenstrasse 33**
**80331 München (DE)**

(56) References cited:
**DE-A- 4 102 412       FR-A- 2 713 799**
**US-A- 5 289 476       US-A- 5 600 673**
**US-A- 5 689 816**

• **YOUNG YEARL HAN ET AL: "ON THE ERROR RATE EVALUATION AND MODULATION CLASSIFICATION FOR COHERENT AND NONCOHERENT PSK SIGNALS USING THE TRANSFORMATION OF RANDOM VARIABLE" PROCEEDINGS OF THE INTERNATIONAL CONFERENCE ON COMMUNICATIONS (ICC), GENEVA, MAY 23 - 26, 1993, vol. 3, 23 May 1993, pages 1508-1514, XP000448389 IEEE, New York, USA.**
• **SOLIMAN S S ET AL: "SIGNAL CLASSIFICATION USING STATISTICAL MOMENTS" IEEE TRANSACTIONS ON COMMUNICATIONS, vol. 40, no. 5, 1 May 1992, pages 908-916, XP000292224 IEEE, New York, USA.**
• **LIEDTKE F F: "COMPUTER SIMULATION OF AN AUTOMATIC CLASSIFICATION PROCEDURE FOR DIGITALLY MODULATED COMMUNICATION SIGNALS WITH UNKNOWN PARAMETERS" SIGNAL PROCESSING, NETHERLANDS, vol. 6, 1984, pages 311-323, XP000602823**

**Description**

The present invention relates to a method for demodulating a digital modulated signal, an adaptive demodulator for demodulating a modulated digital signal according to a selectable one of a plurality of predetermined types of modulation schemes as well as to a wireless telecommunication device such as a base station comprising such an adaptive demodulator.

The present invention generally relates to the technical field of wireless transmission systems and particularly to such wireless transmission systems capable of so-called link adaptation. Adapting the modulation scheme to the actual channel conditions is known as being an elegant way to optimise the transmission performance in a wireless transmission system. This adaptation of the modulation scheme, which is also known as "link adaptation", uses different modulation schemes such as for example BPSK or QPSK depending on the channel SNR to achieve the required bit error rate performance.

In order to change the modulation scheme the transmitter has to inform the receiving side in advance on the used scheme (together with an acknowledgement). According to the state of the art, this is achieved by a certain overhead when changing the modulation scheme or by providing a separate signalling channel. Therefore it is known that the change of the modulation scheme is associated with signalling the modulation scheme, which is done in advance with or without acknowledgement or by "in-band" signalling wherein dedicated symbols in the transmitted symbol stream describe the scheme used in the other data carrying symbols. Obviously, the need for specific signalling the used modulation scheme effects the effective bit rate of the transmission.

Furthermore, according to the state of the art there is the disadvantage that in case of an signalling in advance of the information symbols, the modulation scheme cannot be changed on the "fly" depending on the transmission quality and without overhead for signalling.

In the document "on the error rate evaluation and modulation classification for coherent and non-coherent PSK signals using the transformation of random variable", from Han et al., published on May 23, 1993 a modulation type classifier based on statistical moments is proposed. The employed method comprises the steps of deriving an optimum threshold and calculating the average bit error probability for coherent and non coherent BPSK system using the new probability density function obtained from the transformation of random variable. A Bayes classifier is used to classify the BPSK and QPSK signals using a new probability density function of coherently and non-coherently demodulated signals. Said classifier utilises the statistical moment of samples of the received signal phase as well as the sampled moments of demodulated signals which can be used as sufficient statistics to recognise modulation type of BPSK QPSK signals.

The document "signal classification using statistical moments" from Soliman and Sue, May 1992, proposes an automatic modulation classification algorithm utilizing the statistical moments of the signal phase to classify the modulation type of general Mary PSK signals. For such signals, the $N^{th}$ moment (N even) of the phase of the signal is a monotonic increasing function of M and can therefore be used as discriminating feature to classify "MPSK signals". By means of a threshold comparison, a decision is obtained to classify the signals.

The paper "Computer simulation of an automatic classification procedure for digitally modulated communication signals with unknown parameters" by Liedke, 1984, describes a procedure for allowing an automatic realtime classification of the following modulation types: Amplitude-shift Keying (ASK). Frequency-shift Keying (FSK) with small frequency deviation, and Phase-shift Keying (PSK). An unknown signal is at first received at an antenna and digitised by an analogue-to-digital converter. In a next step, the signal is filtered using different filter bandwidths for approximately matching to the bandwidths of the unknown signal. For this purpose a so-called concentric finit impulse response (FIR) is recommended. The filtered signal is demodulated by means of a universal demodulator that can demodulate all the modulation types of interest without specifically adjusting the modulator parameters. A plurality of the modulators is used, each modulator being matched to just one filter (bandwidth) of the concentric filter bank. In a next feature extraction step, following signal parameters are extracted: Amplitude, instantaneous frequency, and phase. A microcomputer uses said parameters for feature analysis and classification.

Document FR 2,713,799 proposes a method for automatically recognizing the modulation of a received signal. The received signal is at first filtered and digitised from the complex digital samples and statistical moments of order one to four about amplitude, phase and frequency are extracted. Said statistical moments are calculated by means of a vector of 2048 digital samples that are stored in a memory block for calculating the module, argument and phase shift of each digital sample having a real amplitude part and imaginary amplitude part. The statistical moment of order one to four about amplitude, phase and instantaneous signal frequency can then be calculated on the basis of those three vectors of module, argument and instantaneous frequency.

The present invention therefore has the object to provide for a technique for detecting a modulation scheme used on the transmitting side and for detecting a change of the modulation scheme on the transmission side without a distinct signalling channel or distinct signalling symbols.

This object is achieved by means of the features of the independent claims. The dependent claims develop further the idea of invention.

According to the present invention therefore a method for demodulating a digital modulated signal is provided. A modulated digital signal is received wherein the received signal is modulated according to one of a plurality of predetermined types of modulation schemes. Information symbols of the modulated signal itself are statistically processed to obtain at least one indication signal. The received modulated digital is then demodulated according to a selected demodulation scheme, wherein the demodulation scheme is selected based on the value of the at least one indication signal.

The modulated digital signal can be composed of units respectively comprising a plurality of symbols. According to the present invention all symbols of a unit are used for the statistic processing to obtain the at least one indication signal.

A decision is effected on the at least one indication signal to select the demodulation scheme to be used according to the result of the decision, wherein the decision is based on a comparison of a plurality of indication signals with each other and/or a comparison of one indication signal with a predetermined threshold value.

The received modulated digital signal can be modulated according to different PSK modulation schemes, such as for example BPSK and QPSK.

At least one indication signal can be obtained by deciding the closest possible constellation point of an assumed PSK modulation scheme, complex multiplying the conjugate complex of the decided closest possible constellation point with the received symbol, and statistically processing only the in-phase component of the result of complex multiplication.

The statistical processing can be a second order statistical processing.

An indication signal to be compared to the threshold value in the comparison step can be obtained by separating the in-phase and the quadrature-phase component of the received symbol, separate statistical processing of the in-phase and the quadrature-phase component of the received symbol and comparing the statistical processed in-phase and the quadrature-phase component. The indication signal in this case is generated according to the result of this comparison.

The received signal can be multiplied with itself before the separation of the in-phase and the quadrature-phase component such as to achieve a second order statistical processing.

The received signal can be rotated by a phase of PI/4 for the separation of the in-phase and the quadrature-phase component, which is particularly advantageous in case of an OFDM modulated signal.

The received modulated digital signal can be processed by a timing detection and a timing correction before supplying it to the statistical processing steps.

As has already been stated that the received modulated digital signal can be an OFDM modulated signal.

The received modulated digital signal can be a BPSK or a QPSK modulated signal, wherein the BPSK constellation points coincide with QPSK constellation points. With other words the BPSK constellation points are a subset of the QPSK constellation points.

According to the present invention, furthermore, an adaptive demodulator for demodulating a modulated digital signal according to a selectable one of a plurality of predetermined types of modulation schemes is provided. The adaptive demodulator comprises a receiving section for the modulated digital signal. Furthermore a processor for statistically processing information symbols of the modulated signal itself and for outputting at least one indication signal representing the result of the statistical processing is provided. A controller generates a control signal on the basis of the at least one indication signal. A demodulator demodulates the received modulated digital signal according to a selected demodulation scheme, wherein the demodulation scheme is selected on the basis of the control signal.

The modulated digital signal can be composed of units respectively comprising a plurality of symbols. In this case, the processor according to the present invention takes account of all symbols of a unit for the statistical processing to obtain the at least one indication signal.

The controller can comprise a decision circuit effecting a decision on the at least indication signal to select the demodulation scheme to be used by the demodulator according to the result of the decision, wherein the decision is based on a comparison of a plurality of indication signals with each other. Alternatively, the decision can be based on a comparison of one indication signal with a predetermined threshold value respectively supplied to the decision circuit.

The received modulated digital signal can be a PSK modulated signal.

The processor can comprise for deciding the closest possible constellation point of an assumed PSK modulation scheme. Furthermore, means for complex multiplying the conjugate complex of a decided closest possible constellation point with the received symbol can be provided. Furthermore, means for statistically processing only the in-phase component of the result of the complex multiplication can be arranged.

The processor can effect a second order statistical processing.

The processor can comprise means for separating the in-phase and the quadrature-phase component of a symbol of the received signal. Furthermore, means for separate statistical processing the in-phase and the quadrature-phase component of the received signal are provided as well as means for comparing the statistical processed in-phase and the quadrature-phase component.

A multiplier for multiplying the received signal with itself before supplying it to the means for separating the in-phase and the quadrature-phase component of a symbol of the received signal can be provided.

A phase rotating means for rotating the phase of the received signal by PI/4 before supplying it to the separating means for the in-phase and the quadrature-phase component can be provided, which is particularly advantageous in case of a OFDM modulated signal.

Timing detection and timing correction means processing the received modulated digital signal before supplying it to the modulator can be provided.

The received modulated digital signal can be a BPSK or a QPSK modulated signal, wherein the BPSK constellation points coincide with QPSK constellation points.

Furthermore, according to the present invention a wireless telecommunication device is provided comprising an adaptive demodulator according to anyone of the preceding claims. The wireless telecommunication device can be particularly a base station of a telecommunication system.

In the following, further objects, advantages and features of the present invention will come clearer by a detailed description of preferred embodiments of the present invention and with reference to the enclosed figures of the drawings. In the drawings the same reference signs are used coherently for the same or equivalent elements of the different embodiments of the invention.

Fig. 1 shows schematically a receiver block according to the present invention,

Fig. 2 shows a known QPSK constellation scheme,

Fig. 3 shows a known BPSK constellation scheme,

Fig. 4 shows schematically a conventional differential modulator,

Fig.5 shows a detail of the conventional differential modulator shown in Fig. 4,

Fig. 6 shows a differential detector as it is known from the prior art,

Fig. 7 shows a coherent modulation unit as it is known from the prior art,

Fig. 8 shows a first preferred embodiment of an adaptive demodulator according to the present invention,

Fig. 9 shows the performance of the adaptive demodulator shown in Fig. 8 by means of simulation results,

Fig. 10 shows a second embodiment of an adaptive demodulator according to the present invention;

Fig. 11 shows the performance of the adaptive demodulator shown in Fig. 10 by means of simulation results,

Fig. 12 shows a third embodiment of an adaptive demodulator according to the present invention,

Fig. 13 shows the performance of the adaptive demodulator shown in Fig. 12 by means of simulation results,

Fig. 14 shows a fourth embodiment of an adaptive demodulator according to the present invention,

Fig. 15 shows the performance of the demodulator shown in Fig. 14 by means of simulation results,

Fig. 16 shows a fifth embodiment of an adaptive demodulator according to the present invention,

Fig. 17 shows the performance of the adaptive demodulator shown in Fig. 16 by means of simulation results,

Fig. 18 shows the frequency domain differential modulation according to an OFDM transmission,

Fig. 19 shows the information blocks according to an OFDM transmission,

Fig. 20 shows a modified BPSK constellation scheme (BPSK constellation points as subset of the QPSK constellation points,

Fig. 21 shows a sixth embodiment of an adaptive demodulator according to the present invention,

Fig. 22 shows the combination of an adaptive demodulator according to the present invention with a timing detection and a timing correction block,

Fig. 23 shows a known SPS (scrambling phase sequence) modulator,

Fig. 24 shows an adaptive demodulator according to a sixth embodiment of the present invention,

Fig. 25 shows the performance of the adaptive demodulator as shown in Fig. 24 by means of simulation results.

The present invention generally relates to the field of adaptive modulation. In adaptive modulation, which is the base for the so called "link adaptation", a transmission control unit decides on the modulation scheme to be used, wherein this decision can be based for example on signal quality measurement (SNR) of a received signal or the data rate to be transmitted. With other words, the modulation scheme used can be changed in line instantaneously based on traffic or channel conditions..

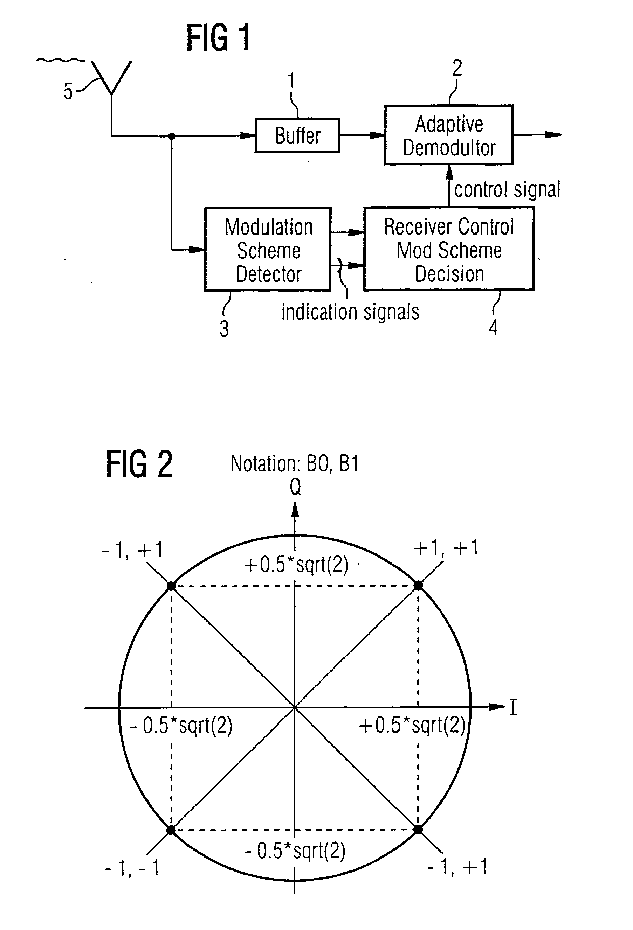

In Fig. 1 the basic structure of a receiver according to the present invention comprising a blind modulation scheme detector 3 is shown. The receiver receives a modulated RF signal from an antenna 5, wherein the modulated RF signal can be modulated according to one of a plurality of types of predetermined schemes. A buffer 1 stores the incoming samples of the received demodulated baseband signal (after down-conversion from the RF signal) modulated RF signal, a modulation scheme detector 3 derives the information on the used modulation schemes and the adaptive demodulator 2 is switched to the demodulation of the incoming signals by a control signal from a receiver control modulation scheme decision circuit 4, which is supplied with indication signals from the modulation scheme detector 3. The receiver control modulation scheme decision circuit 4 makes a decision as which control signal to be issued to the adaptive demodulator 2 depending of the values of one or a plurality of indication signals supplied from the modulation scheme detector 3.

In Fig. 1 the demodulator is shown as one adaptive demodulator block 2. The adaptive demodulator can also be replaced by a bank of different fixed demodulators, wherein in such a case a switch to route the buffer symbols to the correct demodulator is provided, wherein the switch is controlled by the control signal issued by the receiver control modulation scheme decision circuit 4.

In the present description the invention will be explained on the basis of the case that the received digital modulated signal is either BPSK (binary phase shift keying) or QPSK (quarternary phase shift keying) modulated.

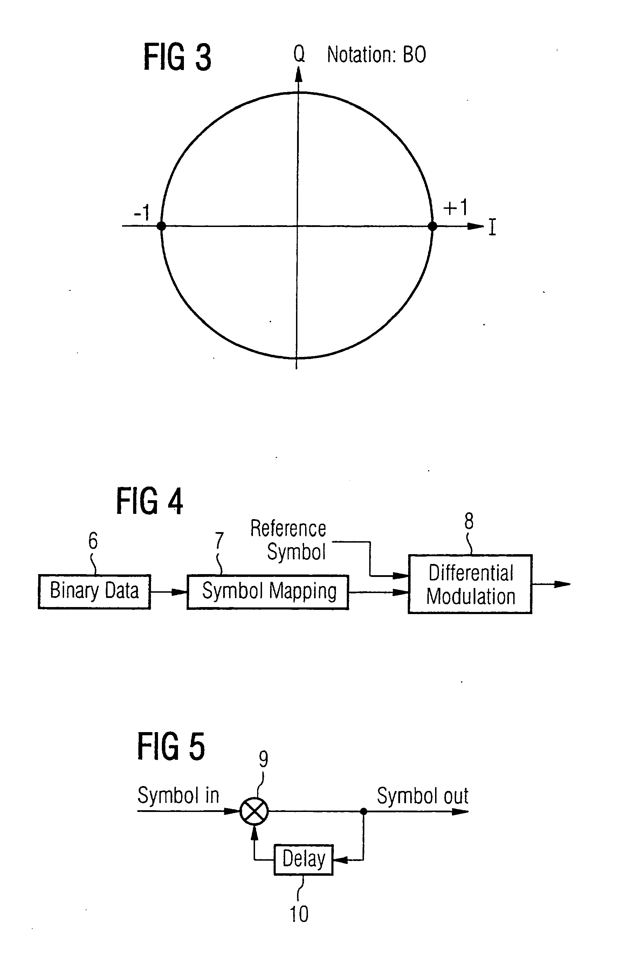

In Fig. 2 and 3 the BPSK and QPSK constellation scheme is depicted.

As the present invention can be used in combination with differential modulation/demodulation, in Fig. 4 and 5 a conventional differential modulator is shown. Binary data 6 are supplied to a symbol mapper 7. A differential modulation circuit 8 is supplied with a reference symbol and the output signal of the symbol mapper 7. The input symbols are mixed 9 with output symbols delayed by a delay line 10. For the reference symbol any symbol having the same power as the data symbols can be used, e.g. $1*e^{i\vartheta}$, where $\vartheta$ is the phase of the reference symbol. This is true for both differential BPSK and differential QPSK modulation.

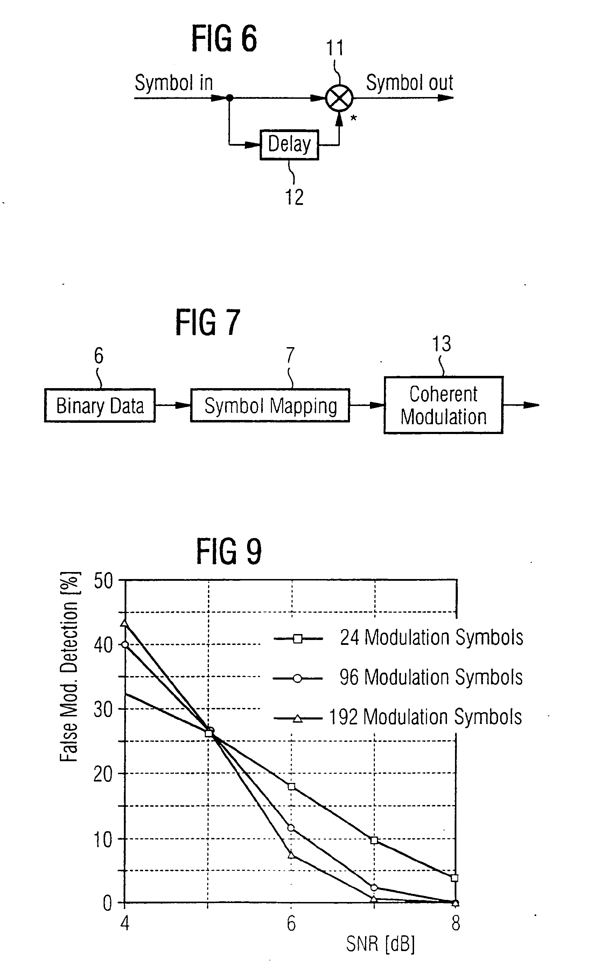

In Fig. 6 a differential detector is shown, in which input symbols are mixed 11 with a conjugate complex and delayed 12 branch of the input symbols.

As the present invention is furthermore applicable to coherent modulation/demodulation, in Fig. 7 a coherent modulation unit is shown, according to which binary data 6 are passed through a symbol mapper 7 and then supplied to a coherent modulator 13. For coherent modulation the modulation and demodulation are possible without phase reference symbol.

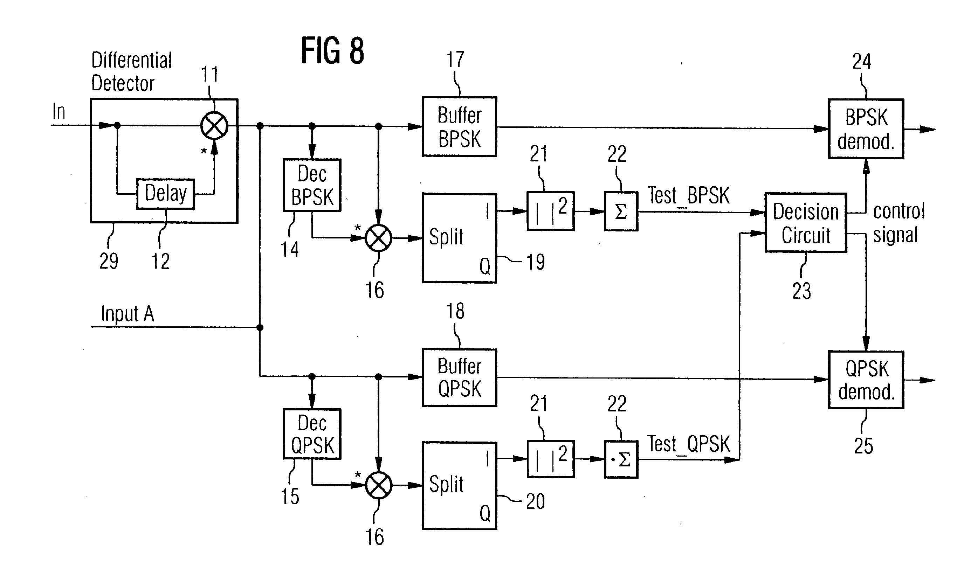

With reference to Fig. 8 a first embodiment of an inventive adaptive demodulator is shown, where it is assumed that traditional QPSK/BPSK constellation diagrams are used for the modulation of the received signal.

In case of a differentially modulated signal, the received signal is first passed through a differential detector 29 comprising a delay line 12 and multiplier 11. In case of a non-differential modulated signal, the differential detector 29 can be omitted. The input signal is then divided up into two branches. In the first branch a BPSK hard decision unit 14 decides on the closest possible transmitted BPSK constellation point, the output is therefore (+1+0j) or (-1+0j) depending on the input constellation. In the second branch a QPSK hard decision unit 15 decides on the closest possible transmitted QPSK constellation point, the output is therefore 0,5 * SQRT (2) * (+1+j) or 0,5 x SQRT (2) X (-1+j) or 0,5 X SQRT (2) x (-1-j) or 0,5 x SQRT (2) x (+1-j). The output of the decision units 14 and 15, respectively, is then supplied to a complex multiplication unit 16, which effects a complex multiplication of the conjugate complex number of the output signal of the decision unit 14 and 15, respectively, with the originally received symbol. The output of the multiplying unit 16 of each branch is then supplied to a split unit 19, 20 separating the in-phase and quadrature-phase data of each path. According to the embodiment of Fig. 8 only the in-phase data are used for the following statistical processing to obtain an indication signal test-BPSK or test-QPSK. In each branch therefore, respectively the in-phase component data are supplied to an absolute square unit 21 calculating the absolute square of the real number at the input.

The output of the square unit 21 is supplied to a Σ unit 22 performing a summation of a all-data used for derivation of the statistic, wherein usually all symbols of a data unit of the received signals are summed up. The output of the Σ unit 22 of each branch, i.e. the indication signal test-BPSK or test-QPSK are respectively supplied to a decision circuit 23. The decision circuit outputs a control signal based on the values of the input indication signals test-BPSK or test-QPSK to a BPSK demodulator 24 and a QPSK demodulator 25. According to the control signal either data buffered in a BPSK buffer 17 are demodulated by the BPSK demodulator 24 or data buffered in a QPSK buffer 18 are demodulated by the QPSK demodulator 25. The buffer units 17, 18 buffer all received symbols belonging to one unit of the received signals.

The decision executed by the decision circuit 23 on the input indication signals test-BPSK and test-QPSK is as follows:

> If test-BPSK > test-QPSK detected modulation scheme = BPSK
> else detected modulation scheme = QPSK.

With other words, if the value of the indication signal test-BPSK is larger than the value of the indication signal test-QPSK, the received data stream output from the BPSK-buffer 17 will be demodulated by the BPSK demodulator 24 according to the control signal of the decision circuit 23. Depending on the detected modulation scheme the buffered data are therefore sent to the appropriate detector. The circuitry of Fig. 8 can be simplified by taking the absolute values instead of calculating the absolute square of the real number at the input (square unit 21).

As it has already been stated, for a coherent receiver the differential detection unit 29 can be omitted and the data can be directly fed to the input A.

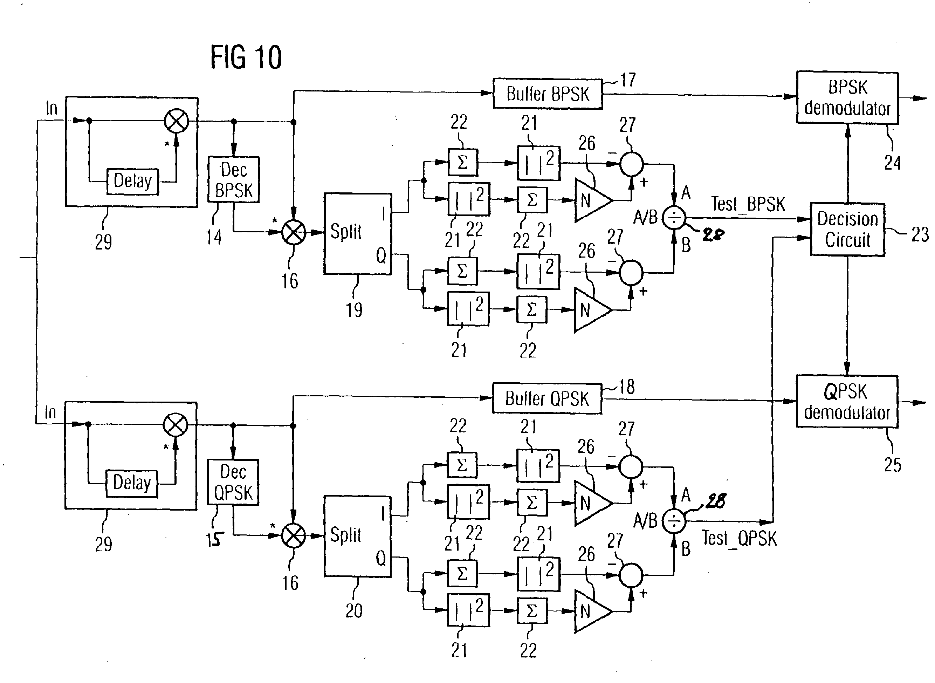

Fig. 9 shows the performance of the adaptive demodulator shown in Fig. 8. The performance of the modulation scheme detector depends on the number of symbols received per unit, wherein a larger number of symbols improves the statistics. In Fig. 9 the performance with different number of symbols as base for the statistical processing is shown. SNR is the signal to noise ratio in an AWGN channel (additive white gaussian noise). As it can be seen from Fig. 9, the performance of the adaptive modulator of Fig. 8 is acceptable for SNR > 6DB.

Fig. 10 shows a second embodiment of the present invention which is essentially based on the first embodiment as shown in Fig. 8. In contrast to Fig. 8 the second embodiment of the invention as shown in Fig. 10 both in the BPSK-branch and the QPSK-branch both the in-phase data and the quadrature-phase data separated by the split units 19, 20, respectively, are used for a statistical processing. Respectively in the BPSK-branch the QPSK-branch the statistically processed in-phase and quadrature-phase data are compared 28 to generate the indication signals test-BPSK and test-QPSK, respectively. As it is shown in Fig. 10, both the BPSK and the QPSK branch both the in-phase data and the quadrature-phase data are split up again in two branches, wherein the first branch is first summed up 22 and then the absolute square of the real number in the input is calculated 21, whereas in the other branch first the absolute square of the input is calculated and then the summation of an all-data use for derivation of the statistics is performed. In the second one of the above branches the output of the summation unit 22 is multiplied with the number N of samples in a data unit by means of an amplifier 26 and then the output signal of the first of the above cited branches is subtracted in a subtractor 27.

The decision circuit 23 according to Fig. 10 effects the same decision as set forth above for the first embodiment shown in Fig. 8.

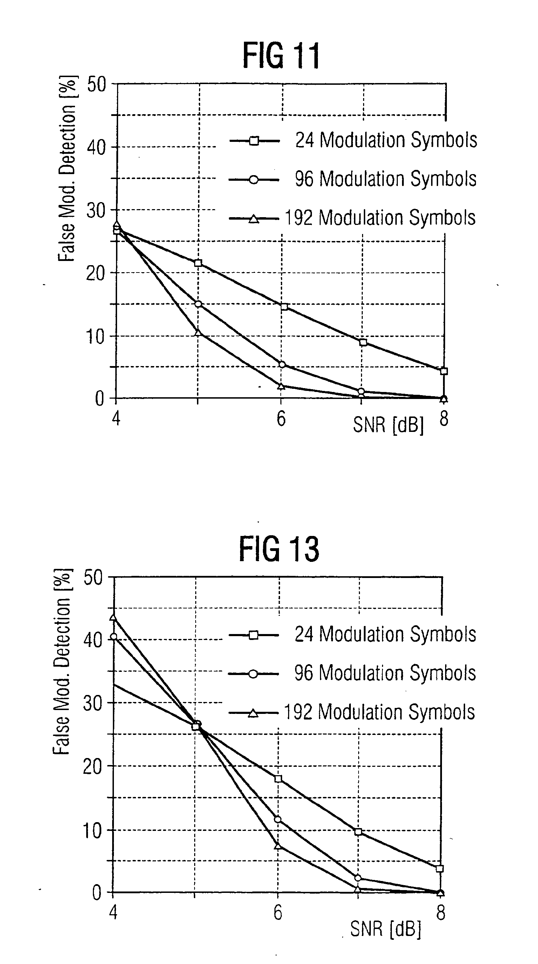

The performance of the adaptive demodulator according to the second embodiment as shown in Fig. 10 is depicted in Fig. 11. Depending on the number of symbols used for derivation of statistical distribution information the performance varies. For a reasonable SNR (> 5DB) a higher number of symbols always gives a better detection performance.

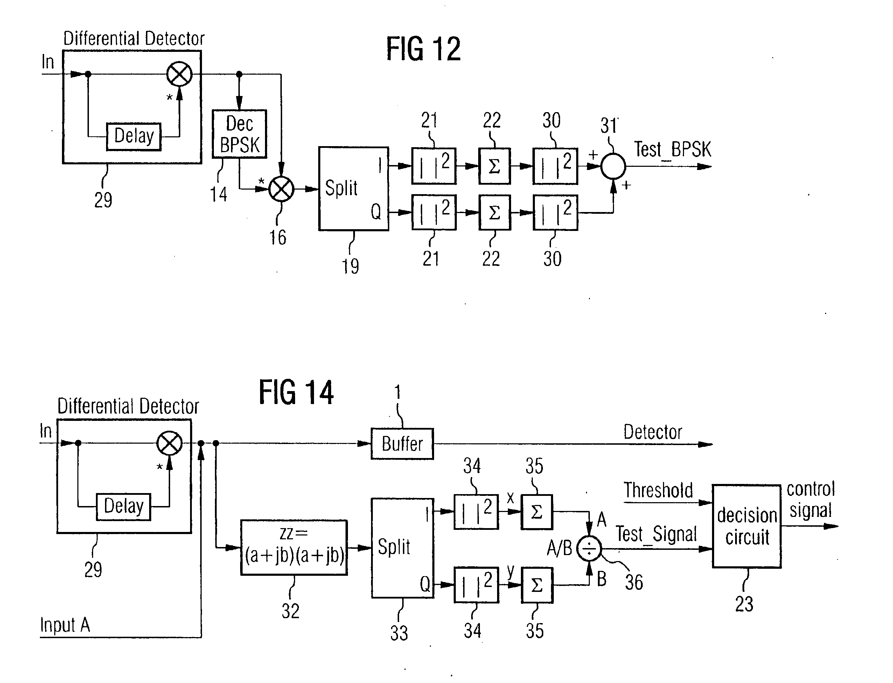

Fig. 12 shows a third embodiment of an adaptive demodulator according to the present invention, wherein only the BPSK-branch is shown. The QPSK-branch looks similar with the exception of the hard decision block (QPSK-decision block). According to the third embodiment as shown in Fig. 12 both the in-phase data and the quadrature- phase data generated by the split unit 19 are first processed by taking the absolute square 21 of the input data, then a summation of a all data used for derivation of the statistics is performed 22 and then again the absolute square of the output signal of the Σ unit 22 is performed. The statistically processed in-phase data and quadrature-phase data are then summed up by the summation circuit 31 to generate the indication signal test-BPSK.

Fig. 13 shows the performance of the adaptive demodulator according to the third embodiment shown in Fig. 12.

Now a fourth embodiment of the present invention will be explained to the reference to Fig. 14. In contrast to the first to third embodiment in the fourth embodiment there is no separation of the QPSK and BPSK branch. Therefore only one indication signal TEST is input to a decision circuit 23 comparing this input indication signal TEST with a predetermined threshold value. The adaptive demodulator shown in Fig. 14 is based on well-known QPSK/BPSK constellation diagrams and derives second order statistics.

Therefore the symbols of the received signal are first multiplied with itself in a multiplier 32 and then supplied to a split unit 33. The split unit 33 again divides the in-phase data and the quadrature data of the input signal and then the separated in-phase data and quadrature-phase data are statistically processed by a circuit 34 taking the absolute square of the input and a $\Sigma$ unit 35 performing a summation of a all data used for derivation of the statistics, before the statistically processed in-phase data and quadrature data are divided by a divider 36 to generate the test signal.

For QPSK we calculate the expectation value of the secondary moment z*z as:

$$E\{z^*z\} = E\left\{\left(1/2\sqrt{2}\left(\left(\pm 1\right)+(\pm j)\right)\right)*\left(1/2\sqrt{2}\left((\pm 1)+(\pm j)\right)\right)\right\} = E\{1/2\ (1\pm 2j - 1)\} = E\{0 \pm j)\}$$

After taking the absolute value $(|...|^2)$ we have:

$$E\{x\} = E\{abs/real(z^*z))\} = 0$$

$$E\{y\} = E\{abs(imag(z^*z))\} = 1$$

For BPSK we calculate the secondary moments z*z as:

$$E\{z^*z\} = E\{(\pm 1) * (\pm 1)\} = 1$$

After taking the absolute value $(|...|^2)$ we have:

$$E\{x\} = E\{abs\ (real(z^*z))\} = 1$$

$$E\{y\} = E\{abs\ (imag(z^*z))\} = 0$$

The decision is as follows:

if (Test-Signal > 1,0) DetectedModScheme = BPSK
else DetectedModScheme = QPSK;

Depending on the detected modulation scheme decision circuit 23 outputs a control signal such that the buffered data are sent to the appropriate detector.

The structure shown in Fig. 14 can be simplified by replacing the division by a simple comparison (a>b). Furthermore the absolute values (simple sign switch) can be taken instead of the calculation of the absolute square by the square unit 34. Again, for a coherent receiver the differential detection unit 29 can be omitted and the data can be directly fed into input A.

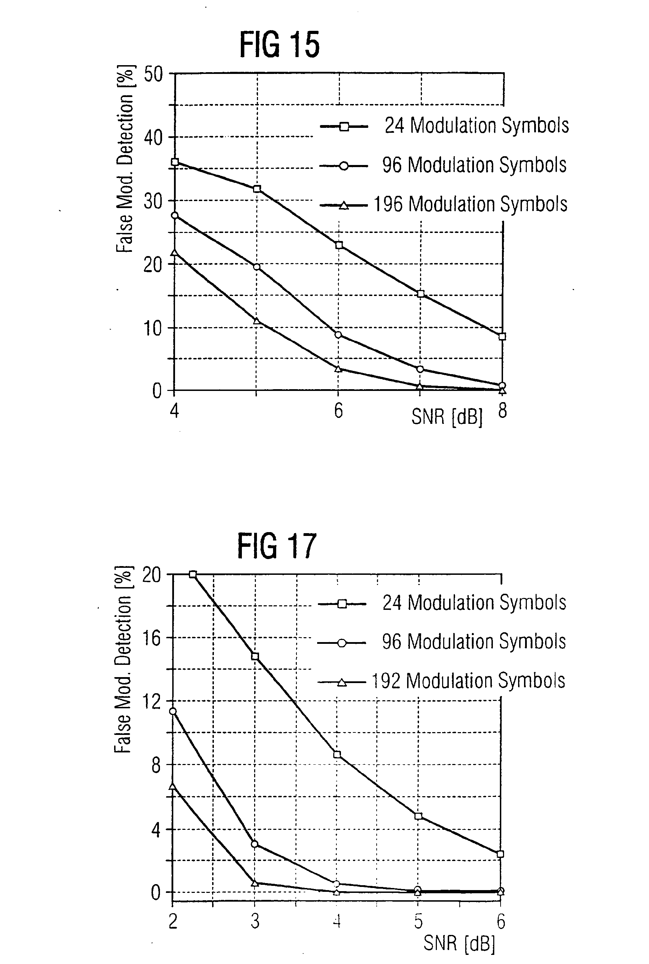

Fig. 15 shows the performance of an adaptive demodulator according to the embodiment shown in Fig. 14. Again the performance of the adaptive demodulator, i.e. the detection of the modulation scheme, depends on the number of symbols received per unit, wherein a larger number of symbols improves the statistics. Fig. 15 shows the performance with different numbers of symbols as base for the statistical processing. SNR again is the signal to noise ratio in an AWGN channel (additive white gaussian noise). As it can be seen from Fig. 15, for SNR>6dB the performance is acceptable for a larger number of symbols per unit.

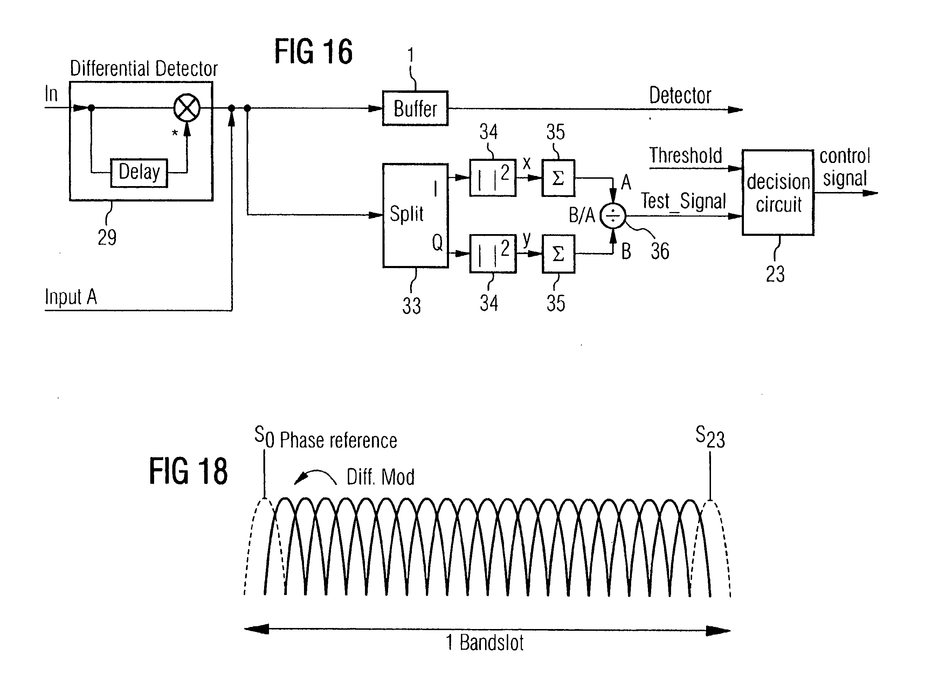

Fig. 16 shows a further embodiment of the present invention effecting a constellation position statistics comparison. In contrast to the embodiment according to Fig. 14, in the embodiment according to Fig. 16 there is no multiplying circuit 32.

After the delay detection the possible constellation states are:

| | | | |
|---|---|---|---|
| QPSK | 0.5*SQRT(2)*(+1+j) | 0.5*SQRT(2)*(-1+j) | 0.5*SQRT(2)*(-1-j) - 0.5*SQRT(2)*(+1-j) |
| BPSK | +1+j*0 | -1+j*0 | |

After the split unit and the absolute value calculation ($|...|^2$) we have for QPSK the following possible constellation points:

$$(x+j*y) = 0.5*SQRT(2)*(+1+j)$$

After the split unit and the absolute value calculation ($|...|^2$) we have for BPSK the following posible constellation points:

$$(x+j*y) = (1+j*0)$$

The decision is as follows:

if (test signal < threshold) DetectedModScheme = BPSK
else DetectedModScheme = QPSK;

For the threshold different values have been tested in order to find suitable compromise between detection performance, number of symbols, SNR.
The table entries are the wrong detection probability in %.

| Symbols | 24 | | | | | |
|---|---|---|---|---|---|---|
| Threshold T | 0.3 | 0.4 | 0.5 | **0.55** | 0.6 | 0.7 |
| SNR | | | | | | |
| 3.0 | | 23.4 | 15.7 | **13.5** | 13.0 | |
| 4.0. | | 15.5 | 9.6 | **8.7** | 8.8 | |
| 5.0 | | 8.3 | 4.4 | **4.4** | 4.9 | |
| 6.0 | | | 3.4 | 1.9 | **2.4** | 3.8 |
| 7.0 | | | 0.92 | 0.99 | **1.6** | 2.5 |

| Symbols | 96 | | | | | |
|---|---|---|---|---|---|---|
| Threshold T | 0.3 | 0.4 | 0.5 | **0.55** | 0.6 | 0.7 |
| SNR | | | | | | |
| 3.0 | 43.9 | 20.8 | 7.0 | **3.7** | 2.1 | 2.5 |
| 4.0. | 31.6 | 8.2 | 1.3 | **0.65** | 0.56 | 2.0 |
| 5.0 | 14.5 | 1.5 | 0.11 | **0.06** | 0.23 | 1.5 |
| 6.0 | 3.2 | 0.11 | 0.0 | **0.01** | 0.05 | 0.8 |
| 7.0 | 3.2 | 0.0 | 0.0 | **0.0** | 0.07 | 0.8 |

| Symbols | 192 | | | | | |
|---|---|---|---|---|---|---|
| Threshold T | 0.3 | 0.4 | 0.5 | **0.55** | 0.6 | 0.7 |
| SNR | | | | | | |
| 3.0 | | 22.1 | 3.1 | **0.78** | 0.22 | 0.45 |
| 4.0. | | 4.6 | 0.17 | **0.0** | 0.0 | 0.16 |

(continued)

| 5.0 | 0.26 | 0.016 | **0.0** | 0.0 | 0.19 |
| 6.0 | 0.0 | 0.0 | **0.0** | 0.0 | 0.12 |
| 7.0 | 0.0 | 0.0 | **0.0** | 0.0 | 0.09 |

A threshold value of 0.55 is good, and a value of 0.5 can be chosen to simplify the detector.

The structure shown in Fig. 16 also can be further simplified by replacing the division unit 36 by a simple comparison unit (b < threshold * a) and by taking the absolute values (simple sign switch) instead of calculating the absolute square in the square unit 34.

Fig. 17 shows the performance of the adaptive demodulator according to the embodiment shown in Fig. 16. In the example of Fig. 17 the threshold value was selected to T = 0,55. As compared to the performances of the preceding embodiments, the performance according to the adaptive demodulator shown in Fig. 16 was superior.

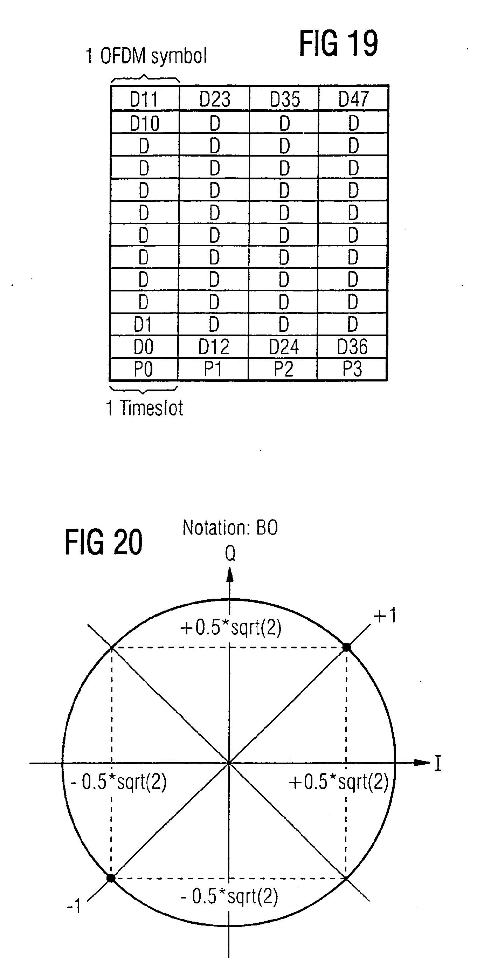

The concept of the present invention is particularly applicable for OFDM modulated transmission signals. Fig. 18 shows a frequency domain differential modulation and Fig. 19 shows information blocks according to an OFDM transmission. It is assumed the case of an OFDM transmission where only one subcarrier carries one information symbol. The data is differentially modulated between adjacent subcarriers. If multiple OFDM symbols belong to the same information unit the symbols are transmitted in adjacent time slots. The differential modulation between adjacent subcarriers and transmission of symbols on the adjacent time slots exploits the benefits of the high channel correlation (coherent bandwidth and coherence time). Fig. 19 particularly shows the usage of several adjacent OFDM symbols as information transmission block.

Fig. 20 shows a modified BPSK transmission constellation diagram which is particularly advantageous in combination with an OFDM transmission. The structure shown in Fig. 20 simplifies the adaptive modulator as now the BPSK constellations are a subset of the QPSK constellation points. The QPSK constellation points remain unchanged.

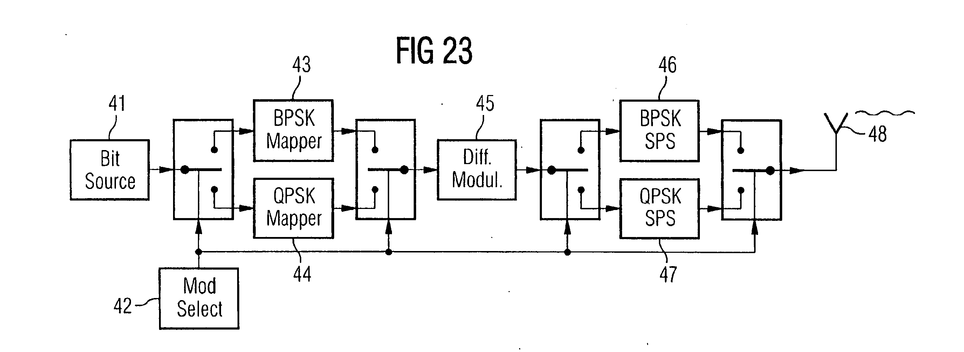

This modified constellation diagram can be easily combined with a timing offset detection/compensation unit as it is shown in Fig. 22. A data stream received from an antenna 5 is buffered in a buffer 38 and then input into a timing correction unit 39 which is controlled by a timing detection unit 40. Further details regarding the timing detection unit 40 and the timing correction unit 39 are disclosed in the application of the same applicant as the present application and filed on the same date as the present application having the title "timing of the detection and correction". Regarding timing detection unit 40 and the timing detection unit 39 it is explicitly made reference to this application.

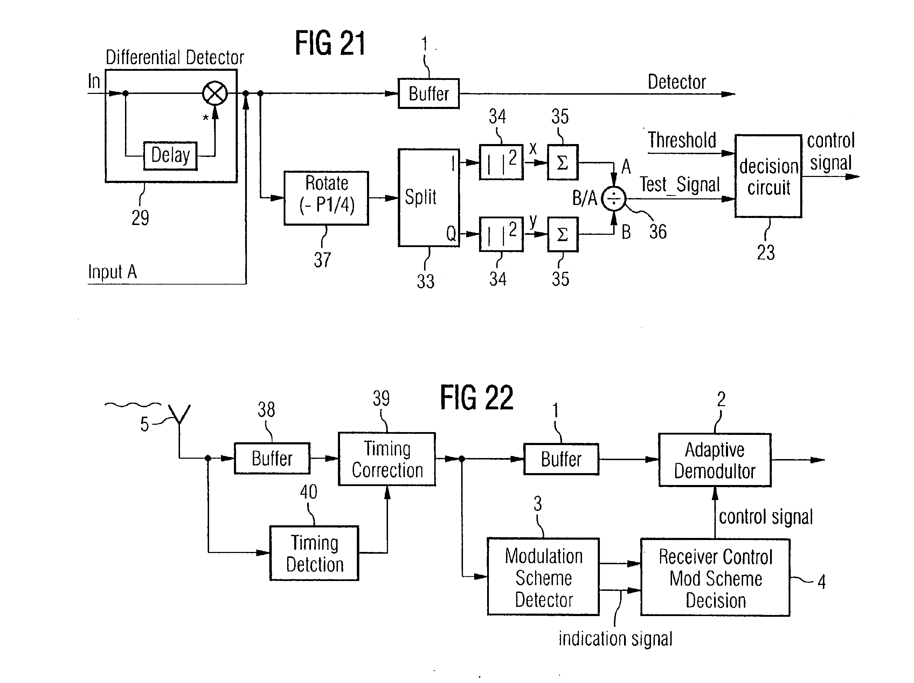

Fig. 21 shows an adaptive demodulator which is based on the reception of modulated signals modulating according the modified QPSK/BPSK constellation diagrams as shown in Fig. 20, wherein the adaptive demodulator a shown in Fig. 21 derives direct constellation point position statistics.

Again a differential detector 29 performs differential detection. Then a differential detected data stream is rotated in the phase by -PI/4 by a phase rotating unit 37. The statistical processing elements following the phase rotation unit 37 correspond to the elements shown in Fig. 16 and explained with reference thereto.

After the rotation by (+PI/4) the possible constellation states are:

QPSK +1+j*0 0+j*1 -1+j*0 0-j*1
BPSK +1+j*0 -1+j*0

After the split unit and the absolute value ($|*|)^2$) we have for QPSK the following possible constellation points:

$$(x+jy) = (1+j*0) \text{ or } (0+j*1)$$

After the split unit and the absolute value ($|*|^2$) we have for BPSK the following possible constellation points:

$$(x+jy) = (1+j*0)$$

The decision is as follows:

if (test signal < threshold) DetectedModScheme = BPSK

else DetectedModScheme = QPSK;

For the threshold different values have been tested in order to find a suitable compromise between detection performance, number of symbols, SNR.

The table entries are the wrong detection probability in %.

| Symbols | 24 | | | | | |
|---|---|---|---|---|---|---|
| Threshold T | 0.3 | 0.4 | 0.5 | **0.55** | 0.6 | 0.7 |
| SNR | | | | | | |
| 3.0 | | 24.2 | 17.9 | **16.2** | 15.5 | |
| 4.0. | | 15.9 | 10.0 | **9.1** | 9.5 | |
| 5.0 | | 8.8 | 6.5 | **6.7** | 7.6 | |
| 6.0 | | 3.7 | 4.1 | **5.0** | 6.3 | |

| Symbols | 96 | | | | | |
|---|---|---|---|---|---|---|
| Threshold T | 0.3 | 0.4 | 0.5 | **0.55** | 0.6 | 0.7 |
| SNR | | | | | | |
| 3.0 | 43.0 | 21.5 | 7.1 | **3.9** | 2.24 | 3.4 |
| 4.0. | 31.6 | 8.4 | 1.1 | **0.56** | 0.52 | 2.4 |
| 5.0 | 10.1 | 1.6 | 0.16 | **0.14** | 0.35 | 2.1 |
| 6.0 | 2.0 | 0.05 | 0.02 | **0.03** | 0.13 | 1.5 |

| Symbols | 192 | | | | | |
|---|---|---|---|---|---|---|
| Threshold T | 0.3 | 0.4 | 0.5 | **0.55** | 0.6 | 0.7 |
| SNR | | | | | | |
| 3.0 | | 21.4 | 3.0 | **0.76** | 0.25 | 0.48 |
| 4.0. | | 4.4 | 0.22 | **0.16** | 0.03 | 0.48 |
| 5.0 | | 0.11 | 0.0 | **0.0** | 0.0 | 0.23 |
| 6.0 | | 0.0 | 0.0 | **0.0** | 0.0 | 0.34 |

Again the structure as shown in Fig. 21 can be simplified by replacing the division unit 36 by a simple comparison unit (b < threshold x a) and by replacing the square absolute unit 34 by an unit taking the absolute values by simple sign switch.

For the threshold value different values have been tested in order to find a suitable compromise between detection performance, number of symbols and SNR. O,55 and 0,5 have been proven to be particularly advantageous values.

The performance of the adaptive demodulator shown in Fig. 21 is excellent and is almost as good as the performance of the detector according to Fig. 16 as it is shown in Fig. 17.

In Fig. 23 a modulator with scrambling phase sequences is shown. Thereby different phase scrambling sequences are mapped to the modulated constellation symbols after differential modulation. The two distinct sequences are known by the receiver unit. As shown in Fig. 23 the adaptive modulator according to this embodiment comprises a bit source 41 and the mode selection unit 42. The mode selection unit 42 selects either a BPSK mapper 43 or a QPSK mapper 44. The output of the BPSK mapper 43 or the QPSK mapper 44 as selected by the mode selection unit 42 is supplied to a differential modulator 45 and then selectively to BPSK/SPS unit 46 or a QPSK/SPS unit 47 and then transmitted by means of an antenna 48.

The two SPS sequences scramble (randomise) the output sequences and make them distinguishable.

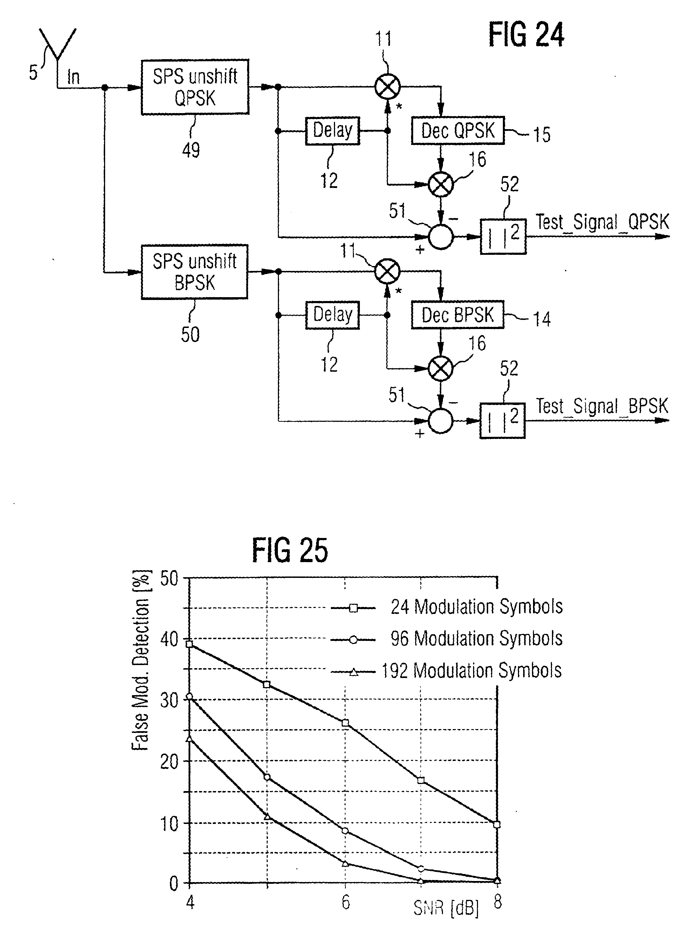

Fig. 24 shows a further embodiment of an adaptive demodulator according to the present invention comprising a SPS based blind modulation scheme detector. The detector shown in Fig. 26 comprises a QPSK/SPS unshift unit 49 and a BPSK/SPS unshift unit 50. The output of the QPSK/SPS unshift unit 49 and the BPSK/SPS unshift unit 50 is respectively supplied to a differential decoder comprising a multiplier 11 and a delay line 12. The output of the differential decoder comprising the multiplier 11 and the delay line 12 is then supplied to a QPSK hard decision unit 15 and a BPSK hard decision unit 14, respectively. The output of the QPSK hard decision unit 15 and the BPSK hard decision unit 14 is then multiplied 16 with an output of the delay line 12. The output of the multiplier 16 is then substracted in a substracting circuit 51 from the original undelayed signal. A square absolute unit 52 processes the subtraction output signals of the subtracting unit 51 to generate an indication test-QPSK and test-BPSK, respectively, which is then supplied to a decision unit 23 which is not shown.

The performance of the adaptive demodulator based on a SPS system according to Fig. 24 is shown in Fig. 25.

The present invention provides for the following advantages vis-à-vis the prior art:

- Adaptive modulation achieves link adaptation (best modulation scheme used for current channel SNR)
- Blind modulation scheme detection without need for signalling of the used modulation scheme (BPSK or QPSK)
- Suitable for OFDM based wireless transmission systems
- Detector can be combined with timing correction units in OFDM case
- Schemes could be used as an additional confirmation when adaptive modulation and signalling of the modulation scheme is used
- Receiver/Detector structures are relatively simple.
- No modification in the transmitter is needed.
- Structures (especially detector according to figure 16 or figure 21) show excellent performance with minimum implementation effort.
- Structures (especially detector T3 and M3) use soft decisions of the statistics (no simple quadrant decision) and therefore have excellent performance.

The present invention describes a way to effect blind modulation scheme detection on the receiver side, wherein the receiver decides on the transmitted signal itself which modulation scheme was sent by the transmitter. Therefore link adaptation is possible without signalling of the used modulation scheme. As these schemes have to operate on statistics of the received constellation diagram in order to decide what the associated modulation scheme was functional blocks for modulation scheme detection have been described according to the different embodiments of an adaptive demodulator according to the present invention.

The shown circuits can be used on both links of a communication system (forward link: central station to terminal and reverse link: terminal to central station).

A preferred application is the usage on the reverse link, where some additional complexity would be allowed on the central station. The terminal then decides itself on the modulation scheme used in the reverse link based on channel condition estimation (SNR) and no additional signalling is required.

**Claims**

1. Method for demodulating a digital modulated signal,
   comprising the following steps:

   - receiving (5) a modulated digital signal, wherein the received signal is modulated according to one of a plurality of predetermined types of modulation schemes,
   - deciding (14, 15) the closest possible constellation point of an assumed PSK modulation scheme,
   - complex multiplying (16) the complex conjugate of the decided closest possible constellation point with the received symbol,
   - statistically processing (21, 22) only the in-phase component of the result of the complex multiplication (16),
   - generating at least one indication signal (Test_BPSK, Test_QPSK) reflecting the result of the statistical processing (21, 22), and
   - demodulating (2) the received modulated digital signal according to a selected demodulation scheme, wherein the demodulation scheme is selected based on the value of the at least one indication signal (Test_BPSK, Test_QPSK).

2. Method for demodulating a digital modulated signal,
   comprising the following steps:

   - receiving (5) a modulated digital signal, wherein the received signal is modulated according to one of a plurality of predetermined types of modulation schemes,
   - separating (19, 33) the in-phase and the quadrature-phase component of the received symbol,
   - statistical processing (21, 22, 30, 34, 35) separately the in-phase and the quadrature-phase component of the received symbol,
   - comparing (28, 31, 36) the statistical processed in-phase and the quadrature-phase component,
   - generating at least one indication signal (Test_BPSK, Test_QPSK, Test-Signal) reflecting the result of the comparison, and

- demodulating (2) the received modulated digital signal according to a selected demodulation scheme, wherein the demodulation scheme is selected based on the value of the at least one indication signal (Test_BPSK, Test_QPSK, Test-Signal).

3. Method according to claim 1 or 2,
**characterized in that**
the modulated digital signal is composed of units respectively comprising a plurality of symbols, wherein all symbols of a unit are used for the statistical processing (3, 4) to obtain the at least one indication signal (Test_BPSK, Test_QPSK, Test-Signal).

4. Method according to any of the preceding claims,
**characterized in that**
a decision (4) is effected on the at least one indication signal (Test_BPSK, Test_QPSK, Test-Signal) to select the demodulation scheme to be used according to the result of the decision (4, 23), wherein the decision (4, 23) is based on a comparison (23) of a plurality of indication signals (Test_BPSK, Test_QPSK) with each other or a comparison (23) of one indication signal (Test-Signal) with a predetermined threshold value.

5. Method according to any of the preceding claims
**characterized in that**
the received modulated digital signal is modulated according to a PSK modulation scheme.

6. Method according to any of claims 2 to 5
**characterized in that**
the statistical processing is a second order statistical processing (32).

7. Method according to claim 2,
**characterized in that**
the received signal is multiplied (32) with itself before the separation (33) of the in-phase and the quadrature-phase component.

8. Method according to any of the preceding claims,
**characterized in that**
the received modulated digital signal is processed by a timing detection (40) and a timing correction (39) before the statistical processing steps (33-36).

9. Method according to any of the preceding claims,
**characterized in that**
the received modulated digital signal is an OFDM modulated signal.

10. Method according to any of the preceding claims,
**characterized in that**
the received modulated digital signal is a BPSK or QPSK modulated signal, wherein the BPSK constellation points coincide with QPSK constellation points.

11. Method according to claim 10,
**characterized in that**
the received constellation point is rotated (37) by -PI/4 before the separation (33) of the in-phase and the quadrature-phase component.

12. Adaptive demodulator for demodulating a modulated digital signal according to a selectable one of a plurality of predetermined types of modulation schemes, comprising:

- a receiving section (5) for the modulated digital signal,
- a processor (3) for statistically processing information symbols of the modulated signal itself and for outputting at least one indication signal (Test_BPSK, Test_QPSK) representing the result of the statistical processing,
- a controller (4) for generating a control signal on the basis of the at least one indication signal (Test_BPSK, Test_QPSK), and
- a demodulator (2) for demodulating the received modulated digital signal according to a selected demodulation scheme, wherein the demodulation scheme is selected on the basis of the control signal,

wherein the processor (4) comprises:

- means (14, 15) for deciding the closest possible constellation point of an assumed PSK modulation scheme,
- means (16) for complex multiplying the complex conjugate of the decided closest possible constellation point with the received symbol, and
- means (21, 22) for statistically processing only the in-phase component of the result of the complex multiplication.

**13.** Adaptive demodulator for demodulating a modulated digital signal according to a selectable one of a plurality of predetermined types of modulation schemes, comprising:

- a receiving section (5) for the modulated digital signal,
- a processor (3) for statistically processing information symbols of the modulated signal itself and for outputting at least one indication signal (Test_BPSK, Test_QPSK, Test-Signal) representing the result of the statistical processing,
- a controller (4) for generating a control signal on the basis of the at least one indication signal (Test_BPSK, Test_QPSK, Test-Signal), and
- a demodulator (2) for demodulating the received modulated digital signal according to a selected demodulation scheme, wherein the demodulation scheme is selected on the basis of the control signal,

wherein the processor (4) comprises:

- means (19, 33) for separating the in-phase and the quadrature-phase component of a symbol of the received signal,
- means (21, 22, 30, 34, 35) for statistically processing separately the in-phase and the quadrature-phase component of the received symbol, and
- means (31, 36) for comparing the statistical processed in-phase and the quadrature-phase component.

**14.** Adaptive demodulator according to claim 12 or 13,
**characterized in that**
the modulated digital signal is composed of units respectively comprising a plurality of symbols, wherein the processor (3) takes account of all symbols of a unit for the statistical processing (3, 4) to obtain the at least one indication signal (Test_BPSK, Test_QPSK, Test-Signal).

**15.** Adaptive demodulator according to any of claims 12 to 14,
**characterized in that**
the controller (4) comprises a decision circuit (23) effecting a decision on the at least one indication signal (Test_BPSK, Test_QPSK, Test-Signal) to select the demodulation scheme to be used by the demodulator (2) according to the result of the decision, wherein the decision is based on a comparison of a plurality of indication signals (Test_BPSK, Test_QPSK) with each other or a comparison of one indication signal (Test-Signal) with a predetermined threshold value respectively supplied to the decision circuit (23).

**16.** Adaptive demodulator according to any of claims 12 to 15,
**characterized in that**
the received modulated digital signal is a PSK modulated signal.

**17.** Adaptive demodulator according to any of claims 13 to 16,
**characterized in that**
the processor (4) effects a second order statistical processing.

**18.** Adaptive demodulator according to claim 13,
**characterized by**
a multiplier (32) for multiplying the received signal with itself before supplying it to the means (33) for separating the in-phase and the quadrature-phase component of a symbol of the received signal.

**19.** Adaptive demodulator according to any of claims 12 to 18,

**characterized by**

timing detection (40) and a timing correction means (39) processing the received modulated digital signal before supplying it to the demodulator (2).

20. Adaptive demodulator according to any of claims 12 to 19,
    **characterized in that**
    the received modulated digital signal is an OFDM modulated signal.

21. Adaptive demodulator according to any of claims 12 to 20,
    **characterized in that**
    the received modulated digital signal is a BPSK or QPSK modulated signal, wherein the BPSK constellation points coincide with QPSK constellation points.

22. Adaptive demodulator according to claim 21,
    **characterized by**
    a phase rotating means (37) for rotating the phase of the received constellation point by -PI/4 before supplying it to the separating means (33) for the in-phase and the quadrature-phase component.

23. Wireless telecommunications device,
    **characterized in that**
    it comprises an adaptive demodulator (2) according to any of claims 12 to 22.

24. Wireless telecommunications device according to claim 23,
    **characterized in that**
    it is a base station of a telecommunication system.

**Patentansprüche**

1. Verfahren zum Demodulieren eines digital modulierten Signals, umfassend die folgenden Schritte:

   - Empfangen (5) eines modulierten digitalen Signals, wobei das empfangene Signal entsprechend einer Art aus einer Vielzahl von bestimmten Arten von Modulationssystemen moduliert ist,
   - Bestimmen (14, 15) des dichtest möglichen Konstellationspunktes eines angenommenen PSK-Modulationssystems,
   - Durchführen einer Komplex-Multiplikation (16) des komplexen konjugierten Wertes des bestimmten dichtest möglichen Konstellationspunktes mit dem empfangenen Symbol,
   - statistisches Verarbeiten (21, 22) lediglich der in Phase befindlichen Komponente des Ergebnisses der Komplex- Multiplikation (16),
   - Erzeugen zumindest eines Anzeigesignals (Test_BPSK, Test_QPSK), welches das Ergebnis der statistischen Verarbeitung (21, 22) wiedergibt, und
   - Demodulieren (2) des empfangenen modulierten digitalen Signals entsprechend einem ausgewählten Demodulationssystem, wobei das Demodulationssystem auf der Grundlage des Wertes des zumindest einen Anzeigesignals (Test_BPSK, Test_QPSK) ausgewählt wird.

2. Verfahren zum Demodulieren eines digital modulierten Signals, umfassend die folgenden Schritte:

   - Empfangen (5) eines modulierten digitalen Signals, wobei das empfangene Signal entsprechend einer Art aus einer Vielzahl von bestimmten Arten von Modulationssystemen moduliert ist,
   - Trennen (19, 33) der in Phase befindlichen Komponente und der um 90° phasenverschobenen Komponente des empfangenen Symbols,
   - gesondertes statistisches Verarbeiten (21, 22, 30, 34, 35) der in Phase befindlichen Komponente und der um 90° phasenverschobenen Komponente des empfangenen Symbols,
   - Vergleichen (28, 31, 36) der statistisch verarbeiteten, in Phase befindlichen Komponente und der in der Phase um 90° phasenverschobenen Komponente,
   - Erzeugen zumindest eines Anzeigesignals (Test_BPSK, Test_QPSK, Test_Signal), welches das Ergebnis des Vergleichs wiedergibt, und
   - Demodulieren (2) des empfangenen modulierten digitalen Signals entsprechend einem ausgewählten Demodulationssystem, wobei das Demodulationssystem auf der Grundlage des Wertes des zumindest einen Anzeigesignals (Test_BPSK, Test_QPSK, Test_Signal) ausgewählt wird.

3.  Verfahren nach Anspruch 1 oder 2, **dadurch gekennzeichnet, dass** das modulierte digitale Signal aus Einheiten besteht, die jeweils eine Vielzahl von Symbolen umfassen, wobei sämtliche Symbole einer Einheit für die statistische Verarbeitung (3, 4) verwendet werden, um das zumindest eine Anzeigesignal (Test_BPSK, Test_QPSK, Test_Signal) zu erhalten.

4.  Verfahren nach einem der vorhergehenden Ansprüche,
    **dadurch gekennzeichnet, dass** eine Entscheidung (4) bezüglich des zumindest einen Anzeigesignals (Test_BPSK, Test_QPSK, Test_Signal) für die Auswahl des entsprechend dem Ergebnis der Entscheidung (4, 23) heranzuziehenden Demodulationssystems vorgenommen wird, wobei die Entscheidung (4, 23) auf einem Vergleich (23) einer Vielzahl von Anzeigesignalen (Test_BPSK, Test_QPSK) miteinander oder auf einem Vergleich (23) eines Anzeigesignals mit einem bestimmten Schwellwert (Test_Signal) gestützt wird.

5.  Verfahren nach einem der vorhergehenden Ansprüche,
    **dadurch gekennzeichnet, dass** das empfangene modulierte digitale Signal entsprechend einem PSK-Modulationssystem moduliert ist.

6.  Verfahren nach einem der Ansprüche 2 bis 5, **dadurch gekennzeichnet, dass** die statistische Verarbeitung eine statistische Verarbeitung (32) zweiter Ordnung ist.

7.  Verfahren nach Anspruch 2, **dadurch gekennzeichnet, dass** das empfangene Signal vor dem Trennen (33) der in Phase befindlichen Komponente und der um 90° phasenverschobenen Komponente mit sich selbst multipliziert (32) wird.

8.  Verfahren nach einem der vorhergehenden Ansprüche,
    **dadurch gekennzeichnet, dass** das empfangene modulierte digitale Signal vor den statistischen Verarbeitungsschritten (33-36) durch eine Zeit-Detektierung (40) und eine Zeit-Korrektur (39) verarbeitet wird.

9.  Verfahren nach einem der vorhergehenden Ansprüche,
    **dadurch gekennzeichnet, dass** das empfangene modulierte digitale Signal ein OFDM-moduliertes Signal ist.

10. Verfahren nach einem der vorhergehenden Ansprüche,
    **dadurch gekennzeichnet, dass** das empfangene modulierte digitale Signal ein BPSK- oder QPSK-moduliertes Signal ist, wobei die BPSK-Konstellationspunkte mit QPSK-Konstellationspunkten koinzidieren.

11. Verfahren nach Anspruch 10, **dadurch gekennzeichnet, dass** der empfangene Konstellationspunkt vor dem Trennen (33) der in Phase befindlichen Komponente und um 90° phasenverschobenen Komponente um - $\pi/4$ gedreht (37) wird.

12. Adaptiver Demodulator zum Demodulieren eines modulierten digitalen Signals entsprechend einer auswählbaren Art aus einer Vielzahl von bestimmten Arten von Modulationssystemen, umfassend:

    - einen Empfangsabschnitt (5) für das modulierte digitale Signal,
    - einen Prozessor (3) zum statistischen Verarbeiten von Informationssymbolen des modulierten Signals selbst und zur Abgabe zumindest eines Anzeigesignals (Test_BPSK, Test_QPSK), welches das Ergebnis der statistischen Verarbeitung repräsentiert,
    - eine Steuereinrichtung (4) zum Erzeugen eines Steuersignals auf der Grundlage des zumindest einen Anzeigesignals (Test_BPSK, Test_QPSK) und
    - einen Demodulator (2) zum Demodulieren des empfangenen modulierten digitalen Signals entsprechend einem ausgewählten Demodulationssystem, wobei das Demodulationssystem auf der Grundlage des Steuersignals ausgewählt wird,

    wobei der Prozessor (4) umfasst:

    - eine Einrichtung (14, 15) zum Bestimmen des dichtest möglichen Konstellationspunktes eines angenommenen PSK-Modulationssystems,

- eine Einrichtung (16) zur Komplex-Multiplikation des komplexen konjugierten Wertes des bestimmten dichtest möglichen Konstellationspunktes mit dem empfangenen Symbol und
- eine Einrichtung (21, 22) zum statistischen Verarbeiten lediglich der in Phase befindlichen Komponente des Ergebnisses der Komplex-Multiplikation.

13. Adaptiver Demodulator zum Demodulieren eines modulierten digitalen Signals entsprechend einer auswählbaren Art aus einer Vielzahl von bestimmten Arten von Modulationssystemen, umfassend:

- einen Empfangsabschnitt (5) für das modulierte digitale Signal,
- einen Prozessor (3) zum statistischen Verarbeiten von Informationssymbolen des modulierten Signals selbst und zur Abgabe zumindest eines Anzeigesignals (Test_BPSK, Test_QPSK, Test_Signal), welches das Ergebnis der statistischen Verarbeitung repräsentiert,
- eine Steuereinrichtung (4) zum Erzeugen eines Steuersignals auf der Grundlage des zumindest einen Anzeigesignals (Test_BPSK, Test_QPSK, Test_Signal) und
- einen Demodulator (2) zum Demodulieren des empfangenen modulierten digitalen Signals entsprechend einem ausgewählten Demodulationssystem, wobei das Demodulationssystem auf der Grundlage des Steuersignals ausgewählt wird,

wobei der Prozessor (4) umfasst:

- eine Einrichtung (19, 33) zum Trennen der in Phase befindlichen Komponente und der um 90° phasenverschobenen Komponente eines Symbols des empfangenen Signals,
- eine Einrichtung (21, 22, 30, 34, 35) zum gesonderten statistischen Verarbeiten der in Phase befindlichen Komponente und der um 90° phasenverschobenen Komponente des empfangenen Symbols und
- eine Einrichtung (31, 36) zum Vergleichen der statistisch verarbeiteten, in Phase befindlichen Komponente und der um 90° phasenverschobenen Komponente.

14. Adaptiver Demodulator nach Anspruch 12 oder 13,
**dadurch gekennzeichnet, dass** das modulierte digitale Signal aus Einheiten besteht, die jeweils eine Vielzahl von Symbolen umfassen, wobei der Prozessor (3) sämtliche Symbole einer Einheit für die statistische Verarbeitung (3, 4) berücksichtigt, um das zumindest eine Anzeigesignal (Test_BPSK, Test_QPSK, Test_Signal) zu erhalten.

15. Adaptiver Demodulator nach einem der Ansprüche 12 bis 14, **dadurch gekennzeichnet, dass** die Steuereinrichtung (4) eine Entscheidungsschaltung (23) enthält, die eine Entscheidung bezüglich des zumindest einen Anzeigesignals (Test_BPSK, Test_QPSK, Test_Signal) für die Auswahl des von dem Demodulator (2) zu benutzenden Demodulationssystems entsprechend dem Ergebnis der Entscheidung vornimmt, wobei die Entscheidung auf einem Vergleich einer Vielzahl von Anzeigesignalen (Test_BPSK, Test_QPSK) miteinander oder auf einem Vergleich eines Anzeigesignals (Test_Signal) mit einem bestimmten Schwellwert basiert, der der Entscheidungsschaltung (23) zugeführt ist.

16. Adaptiver Demodulator nach einem der Ansprüche 12 bis 15,
**dadurch gekennzeichnet, dass** das empfangene modulierte digitale Signal ein PSK-moduliertes Signal ist.

17. Adaptiver Demodulator nach einem der Ansprüche 13 bis 16,
**dadurch gekennzeichnet, dass** der Prozessor (4) eine statistische Verarbeitung zweiter Ordnung ausführt.

18. Adaptiver Demodulator nach Anspruch 13, **gekennzeichnet durch** einen Multiplizierer (32) zum Multiplizieren des empfangenen Signals mit sich selbst vor dessen Abgabe an die Einrichtung (33) zum Trennen der in Phase befindlichen Komponente und der um 90° phasenverschobenen Komponente eines Symbols des empfangenen Signals.

19. Adaptiver Demodulator nach einem der Ansprüche 12 bis 18,
**dadurch gekennzeichnet, dass** Zeit-Detektierungs- und eine Zeit-Korrektur-Einrichtung (40, 39) das empfangene modulierte digitale Signal vor dessen Abgabe an den Demodulator (2) verarbeitet.

20. Adaptiver Demodulator nach einem der Ansprüche 12 bis 19, **dadurch gekennzeichnet, dass** das empfangene modulierte digitale Signal ein OFDM-moduliertes Signal ist.

21. Adaptiver Demodulator nach einem der Ansprüche 12 bis 20, **dadurch gekennzeichnet, dass** das empfangene modulierte digitale Signal ein BPSK- oder QPSK-moduliertes Signal ist, wobei die BPSK-Konstellationspunkte mit QPSK-Konstellationspunkten koinzidieren.

**22.** Adaptiver Demodulator nach Anspruch 21, **gekennzeichnet durch** eine Phasendreheinrichtung (37) zum Drehen der Phase des empfangenen Konstellationspunktes um -$\pi$/4 vor dessen Abgabe an die Trenneinrichtung (33) für die in Phase befindliche Komponente und die um 90° phasenverschobene Komponente.

**23.** Drahtlose Telekommunikationsvorrichtung, **dadurch gekennzeichnet, dass** sie einen adaptiven Demodulator (2) nach einem der Ansprüche 12 bis 22 enthält.

**24.** Drahtlose Telekommunikationsvorrichtung nach Anspruch 23,
**dadurch gekennzeichnet, dass** sie eine Basisstation eines Telekommunikationssystems ist.

**Revendications**

**1.** Procédé de démodulation d'un signal modulé numérique,
comprenant les étapes suivantes :

- réception (5) d'un signal numérique modulé, le signal reçu étant modulé selon un schéma de modulation parmi une pluralité de types prédéterminés de schémas de modulation,
- décision (14, 15) du point de constellation le plus proche possible d'un schéma de modulation PSK supposé,
- multiplication complexe (16) du conjugué complexe du point de constellation le plus proche possible décidé avec le symbole reçu,
- traitement statistique (21, 22) uniquement de la composante en phase du résultat de la multiplication complexe (16),
- génération d'au moins un signal d'indication (Test_BPSK, Test_QPSK) reflétant le résultat du traitement statistique (21, 22), et
- démodulation (2) du signal numérique modulé reçu selon un schéma de démodulation sélectionné, le schéma de démodulation étant sélectionné en se basant sur la valeur de l'au moins un signal d'indication (Test_BPSK, Test_QPSK).

**2.** Procédé de démodulation d'un signal modulé numérique,
comprenant les étapes suivantes :

- réception (5) d'un signal numérique modulé, le signal reçu étant modulé selon un schéma de modulation parmi une pluralité de types prédéterminés de schémas de modulation,
- séparation (19, 33) de la composante en phase et de la composante de phase en quadrature du symbole reçu,
- traitement statistique (21, 22, 30, 34, 35) séparé de la composante en phase et de la composante de phase en quadrature du symbole reçu,
- comparaison (28, 31, 36) de la composante en phase et de la composante de phase en quadrature traitées statistiquement,
- génération d'au moins un signal d'indication (Test_BPSK, Test_QPSK, Test_Signal) reflétant le résultat de la comparaison, et
- démodulation (2) du signal numérique modulé reçu selon un schéma de démodulation sélectionné, le schéma de démodulation étant sélectionné en se basant sur la valeur de l'au moins un signal d'indication (Test_BPSK, Test_QPSK, Test_Signa!).

**3.** Procédé selon la revendication 1 ou 2,
**caractérisé en ce que**
le signal numérique modulé est composé d'unités comprenant respectivement une pluralité de symboles, tous les symboles d'une unité étant utilisés pour le traitement statistique (3, 4) pour obtenir l'au moins un signal d'indication (Test_BPSK, Test_QPSK, Test_Signal).

**4.** Procédé selon l'une quelconque des revendications précédentes,
**caractérisé en ce que**
une décision (4) est prise sur l'au moins un signal d'indication (Test_BPSK, Test_QPSK, Test_Signal) pour sélectionner le schéma de démodulation à utiliser selon le résultat de la décision (4, 23), la décision (4, 23) étant basée sur une comparaison (23) d'une pluralité de signaux d'indication (Test_BPSK, Test_QPSK) les uns avec les autres ou une comparaison (23) d'un signal d'indication (Test_Signal) avec une valeur de seuil prédéterminée.

**5.** Procédé selon l'une quelconque des revendications précédentes,
**caractérisé en ce que**
le signal numérique modulé reçu est modulé selon un schéma de modulation PSK.

**6.** Procédé selon l'une quelconque des revendications 2 à 5,
**caractérisé en ce que**
le traitement statistique est un traitement statistique de deuxième ordre (32).

**7.** Procédé selon la revendication 2,
**caractérisé en ce que**
le signal reçu est multiplié (32) avec lui-même avant la séparation (33) de la composante en phase et de la composante de phase en quadrature.

**8.** Procédé selon l'une quelconque des revendications précédentes,
**caractérisé en ce que**
le signal numérique modulé reçu est traité par une détection de temporisation (40) et une correction de temporisation (39) avant les étapes de traitement statistique (33-36).

**9.** Procédé selon l'une quelconque des revendications précédentes,
**caractérisé en ce que**
le signal numérique modulé reçu est un signal modulé OFDM.

**10.** Procédé selon l'une quelconque des revendications précédentes,
**caractérisé en ce que**
le signal numérique modulé reçu est un signal modulé BPSK ou QPSK, les points de constellation BPSK coïncidant avec les points de constellation QPSK.

**11.** Procédé selon la revendication 10,
**caractérisé en ce que**
le point de constellation reçu est mis en rotation (37) de -PI/4 avant la séparation (33) de la composante en phase et de la composante de phase en quadrature.

**12.** Démodulateur adaptatif destiné à démoduler un signal numérique modulé selon un schéma de modulation pouvant être sélectionné parmi une pluralité de types prédéterminés de schémas de modulation, comprenant :

- une section de réception (5) pour le signal numérique modulé,
- un processeur (3) destiné à traiter statistiquement des symboles d'information du signal modulé lui-même et à sortir au moins un signal d'indication (Test_BPSK, Test_QPSK) représentant le résultat du traitement statistique,
- un dispositif de commande (4) destiné à générer un signal de commande sur la base de l'au moins un signal d'indication (Test_BPSK, Test QPSK), et
- un démodulateur (2) destiné à démoduler le signal numérique modulé reçu selon un schéma de démodulation sélectionné, le schéma de démodulation étant sélectionné sur la base du signal de commande,

dans lequel le processeur (4) comprend :

- des moyens (14, 15) destinés à décider le point de constellation le plus proche possible d'un schéma de modulation PSK supposé,
- des moyens (16) destinés à effectuer la multiplication complexe du conjugué complexe du point de constellation le plus proche possible décidé avec le symbole reçu, et
- des moyens (21, 22) destinés à traiter statistiquement uniquement la composante en phase du résultat de la multiplication complexe.

**13.** Démodulateur adaptatif destiné à démoduler un signal numérique modulé selon un schéma de modulation pouvant être sélectionné parmi une pluralité de types prédéterminés de schémas de modulation, comprenant :

- une section de réception (5) pour le signal numérique modulé,
- un processeur (3) destiné à traiter statistiquement des symboles d'information du signal modulé lui-même et à sortir au moins un signal d'indication (Test_BPSK, Test_QPSK, Test_Signal) représentant le résultat du traitement statistique,
- un dispositif de commande (4) destiné à générer un signal de commande sur la base de l'au moins un signal d'indication (Test_BPSK, Test_QPSK, Test_Signal), et
- un démodulateur (2) destiné à démoduler le signal numérique modulé reçu selon un schéma de démodulation sélectionné, le schéma de démodulation étant sélectionné sur la base du signal de commande,

dans lequel le processeur (4) comprend :

- des moyens (19, 33) destinés à séparer la composante en phase et la composante de phase en quadrature d'un symbole du signal reçu,
- des moyens (21, 22, 30, 34, 35) destinés à traiter statistiquement séparément la composante en phase et la composante de phase en quadrature du symbole reçu, et
- des moyens (31, 36) destinés à comparer la composante en phase et la composante de phase en quadrature traitées statistiquement.

**14.** Démodulateur adaptatif selon la revendication 12 or 13,
**caractérisé en ce que**
le signal numérique modulé est composé d'unités comprenant respectivement une pluralité de symboles, le processeur (3) tenant compte de tous les symboles d'une unité pour le traitement statistique (3, 4) pour obtenir l'au moins un signal d'indication (Test_BPSK, Test_QPSK, Test_Signal).

**15.** Démodulateur adaptatif selon l'une quelconque des revendications 12 à 14,
**caractérisé en ce que**
le dispositif de commande (4) comprend un circuit de décision (23) prenant une décision sur l'au moins un signal d'indication (Test_BPSK, Test_QPSK, Test_Signal) pour sélectionner le schéma de démodulation à utiliser par le démodulateur (2) selon le résultat de la décision, la décision étant basée sur une comparaison d'une pluralité de signaux d'indication (Test_BPSK, Test_QPSK) les uns avec les autres ou une comparaison d'un signal d'indication (Test_Signal) avec une valeur de seuil prédéterminée respectivement envoyés au circuit de décision (23).

**16.** Démodulateur adaptatif selon l'une quelconque des revendications 12 à 15,
**caractérisé en ce que**
le signal numérique modulé reçu est un signal modulé PSK.

**17.** Démodulateur adaptatif selon l'une quelconque des revendications 13 à 16,
**caractérisé en ce que**
le processeur (4) effectue un traitement statistique de deuxième ordre.

**18.** Démodulateur adaptatif selon la revendication 13,
**caractérisé par**
un multiplicateur (32) destiné à multiplier le signal reçu avec lui-même avant de l'envoyer aux moyens (33) destinés à séparer la composante en phase et la composante de phase en quadrature d'un symbole du signal reçu.

**19.** Démodulateur adaptatif selon l'une quelconque des revendications 12 à 18,
**caractérisé par**
des moyens de détection de temporisation (40) et de correction de temporisation (39) traitant le signal numérique modulé reçu avant de l'envoyer au démodulateur (2).

**20.** Démodulateur adaptatif selon l'une quelconque des revendications 12 à 19,
**caractérisé en ce que**
le signal numérique modulé reçu est un signal modulé OFDM.

**21.** Démodulateur adaptatif selon l'une quelconque des revendications 12 à 20,
**caractérisé en ce que**
le signal numérique modulé reçu est un signal modulé BPSK ou QPSK, les points de constellation BPSK coïncidant avec les points de constellation QPSK.

**22.** Démodulateur adaptatif selon la revendication 21,
**caractérisé par**
des moyens de rotation de phase (37) destinés à mettre en rotation la phase du point de constellation reçu de -PI/4 avant de l'envoyer aux moyens de séparation (33) pour la composante en phase et la composante de phase en quadrature.

**23.** Dispositif de télécommunication sans fil,
**caractérisé en ce que**
il comprend un démodulateur adaptatif (2) selon l'une quelconque des revendications 12 à 22.

**24.** Dispositif de télécommunication sans fil selon la revendication 23,
**caractérisé en ce que**
il s'agit d'une station de base d'un système de télécommunication.

# FIG 1

Buffer (1)

Adaptive Demodultor (2)

control signal

Modulation Scheme Detector (3)

Receiver Control Mod Scheme Decision (4)

indication signals

5

# FIG 2

Notation: B0, B1

Q

-1, +1     +0.5*sqrt(2)     +1, +1

-0.5*sqrt(2)     +0.5*sqrt(2)    I

-1, -1     -0.5*sqrt(2)     -1, +1

## FIG 3

Q  Notation: BO

-1    +1    I

## FIG 4

6

Binary Data → 7

Symbol Mapping →

Reference Symbol

8

Differential Modulation →

## FIG 5

9

Symbol in ⊗ ● Symbol out

Delay

10

## FIG 6

Symbol in          11        Symbol out

Delay

*

12

## FIG 7

6              7             13

| Binary Data | → | Symbol Mapping | → | Coherent Modulation | → |

## FIG 9

False Mod. Detection [%] vs SNR [dB]

—□— 24 Modulation Symbols

—○— 96 Modulation Symbols

—△— 192 Modulation Symbols

# FIG 8

## FIG 10

EP 0 984 595 B1

## FIG 11

## FIG 13

EP 0 984 595 B1

## FIG 12

**Differential Detector**

In → ⊗ → Dec BPSK (14) → ⊗ (16) → Split (19)

I → $||^2$ (21) → $\Sigma$ (22) → $||^2$ (30) → + ⊗ (31) → Test_BPSK

Q → $||^2$ (21) → $\Sigma$ (22) → $||^2$ (30) → +

Delay

29

## FIG 14

**Differential Detector**

In → ⊗ → Buffer (1) → Detector

Delay

29

Input A

zz= (a+jb)(a+jb) (32) → Split (33)

I → $||^2$ (34) → x → $\Sigma$ (35) → A

Q → $||^2$ (34) → y → $\Sigma$ (35) → B

A/B ÷ (36) → Test_Signal

Threshold → decision circuit (23) → control signal

# FIG 15

# FIG 17

FIG 16

Differential Detector

In

$\bigotimes$

Delay

*

29

Input A

Buffer

1

Detector

Split

I

Q

33

$|\ |^2$

34

x

$\Sigma$

35

$|\ |^2$

34

y

$\Sigma$

35

A

B

B/A $\div$

36

Test_Signal

Threshold

decision circuit

23

control signal

FIG 18

$S_0$ Phase reference

Diff. Mod

$S_{23}$

1 Bandslot

EP 0 984 595 B1

**FIG 19**

1 OFDM symbol

| D11 | D23 | D35 | D47 |
|-----|-----|-----|-----|
| D10 | D | D | D |
| D | D | D | D |
| D | D | D | D |
| D | D | D | D |
| D | D | D | D |
| D | D | D | D |
| D | D | D | D |
| D | D | D | D |
| D | D | D | D |
| D1 | D | D | D |
| D0 | D12 | D24 | D36 |
| P0 | P1 | P2 | P3 |

1 Timeslot

**FIG 20**

Notation: B0

EP 0 984 595 B1

## FIG 21

Differential Detector

In

Input A

29

Delay

*

Rotate (- P1/4)

37

Split

33

I

Q

$| |^2$ 34

$| |^2$ 34

x

y

$\Sigma$ 35

$\Sigma$ 35

A

B

B/A $\div$

36

1

Buffer

Detector

Threshold

Test_Signal

decision circuit

23

control signal

## FIG 22

5

Buffer

38

Timing Correction

39

Timing Detction

40

1

Buffer

Modulation Scheme Detector

3

Receiver Control Mod Scheme Decision

4

2

Adaptive Demodultor

control signal

indication signal

EP 0 984 595 B1

## FIG 23

# FIG 24

SPS unshift QPSK
49

Delay
12

⊗ 11

Dec QPSK — 15

⊗ 16

51

− +

| |² 52

Test_Signal_QPSK

SPS unshift BPSK
50

Delay
12

⊗ 11

Dec BPSK — 14

⊗ 16

51

− +

| |² 52

Test_Signal_BPSK

5 In

# FIG 25

False Mod. Detection [%]

- □— 24 Modulation Symbols
- ○— 96 Modulation Symbols
- △— 192 Modulation Symbols

SNR [dB]